# EUROPÄISCHE PATENTSCHRIFT

(11) **EP 2 506 796 B1**
(45) Veröffentlichungstag und Bekanntmachung des Hinweises auf die Patenterteilung: **07.06.2023**
(21) Anmeldenummer: 10776316.1
(22) Anmeldetag: 05.11.2010
(51) Int. Cl.: A61C 13/00, A61C 13/10

(54) **HERSTELLUNG INDIVIDUELLER DENTALER PROTHESEN VIA CAD/CAM UND RAPID MANUFACTURING/RAPID PROTOTYPING AUS DATEN DER DIGITALEN ABDRUCKNAHME**
PRODUCTION OF INDIVIDUAL DENTAL PROSTHESES VIA CAD/CAM AND RAPID MANUFACTURING/RAPID PROTOTYPING FROM DATA OF THE DIGITAL IMPRESSION
FABRICATION DE PROTHÈSES DENTAIRES INDIVIDUELLES PAR CONCEPTION ET FABRICATION ASSISTÉES PAR ORDINATEUR, ET FABRICATION ET PROTOTYPAGE RAPIDES À PARTIR DES DONNÉES DE LA PRISE D'EMPREINTES NUMÉRIQUE

(30) Priorität: 04.12.2009 DE 102009056752
(43) Veröffentlichungstag der Anmeldung: 10.10.2012
(73) Patentinhaber: Kulzer GmbH, 63450 Hanau (DE)
(72) Erfinder: RUPPERT, Klaus, 63477 Maintal (DE); BEYER, Mario, 61350 Bad Homburg (DE)
(74) Vertreter: Bendele, Tanja
(86) Internationale Anmeldenummer: PCT/EP2010/006753
(87) Internationale Veröffentlichungsnummer: WO 2011/066895

(56) Entgegenhaltungen:
- EP-A2- 1 864 627
- DE-A1-102007 002 178
- US-A1- 2009 087 818
- US-A1- 2009 287 332

## Beschreibung

Die Herstellung von Zahnvoll- oder -teilprothesen erfolgt nach an sich bekannten Verfahren. Zu nennen sind z. B. die herkömmlichen Verfahren der Pulver/Flüssigkeitstechnologie, wie sie seit langem bekannt und in der Literatur beschrieben sind (z.B. EP 1 243 230 A2, US 6,881,360 B2 und "Dental Materials" in: Ullmann's Encyclopedia of Industrial Chemistry Copyright 2002 by Wiley-VCH Verlag).

Allgemein sind drei unterschiedliche Hauptmaterialklassen zur Herstellung von totalprothetischen Arbeiten bekannt. Dies sind auf Polymethylmethacrylat (PMMA) basierende Zweikomponentenmaterialien [Handelsprodukte Palapress, Paladur (Heraeus Kulzer, DE), SR 3/60^{®} Quick (Ivoclar, LI), Degupress ^{®} (Degussa-Hüls, DE)]; PMMA-freie heißhärtende Materialien [Handelsprodukte sind z.B. Paladon^{®} 65 (Heraeus Kulzer, DE), SR 3/60^{®}, SR Ivocap^{®} (Ivoclar, LI), Lucitone^{®} (Dentsply, US)] sowie thermoplastisch verarbeitbare Spritzgießmassen.

Die thermoplastischen Materialien werden erhitzt und meist über ein Spritzgussverfahren in einen Hohlraum injiziert. Ein bekanntes Verfahren ist "Polyapress"^{®}, welches unter anderem von der Fa. Bredent, Senden (DE), vertrieben wird. Es hat nicht an Versuchen gefehlt, Polymere wie etwa PVC, Polyurethan, Polyamid oder Polycarbonat einzusetzen (Ullmann's aaO 5.1.5. Other Denture Resins.)

Weiter existieren Verfahren, die auf licht- oder mikrowellenhärtenden 1-Komponenten-Materialien aufbauen (z.B. Versyo.com^{®} von Heraeus Kulzer; (Ullmann's aaO 5.1.3. Light-Cured Polymers, 5.1.4. Microwave-Cured Polymers).

Allen diesen Werkstoffen gemeinsam sind die zur Vorbereitung der Kunststoffverarbeitung notwendigen Arbeiten.

Aus der Zahntechnik sind außerdem schichtaufbauende Verfahren bekannt. Diese werden meist in Verbindung mit lichthärtenden Materialien angewandt. Z.B. zur Verblendung von Metallkronen oder zur Erstellung einer Prothese. Vorteile bei diesen Verfahren sind die während des Verfahrens mögliche Kontrolle und die Möglichkeit der Variation der Farben, um möglichst ästhetische zahntechnische Arbeiten zu erhalten.

Es wurden auch schnelle Prototypherstellung(Rapid-Prototyping)-Verfahren zum Einsatz in der Zahntechnik vorgeschlagen. Rapid Prototyping (deutsch schneller Prototypenbau) ist ein Verfahren zur schnellen Herstellung von Musterbauteilen ausgehend von Konstruktionsdaten. Rapid-Prototyping-Verfahren sind somit Fertigungsverfahren, die das Ziel haben, vorhandene CAD-Daten möglichst ohne manuelle Umwege oder Formen direkt und schnell in Werkstücke umzusetzen. Die für diese Verfahrensgruppe relevante Datenschnittstelle ist das STL-Format. Die unter dem Begriff des Rapid Prototyping seit den 1980er Jahren bekannt gewordenen Verfahren sind in der Regel Urformverfahren, die das Werkstück schichtweise aus formlosem oder formneutralem Material unter Nutzung physikalischer und/oder chemischer Effekte aufbauen. Dabei wird mit polymerisierbaren Schichten (DE 101 14 290 A1, DE 101 50 256 A1) oder Ink-Jet-Pulverdruck (US 6,322,728 B1) gearbeitet.

Im Wesentlichen werden bei der Herstellung von Totalprothesen folgende Schritte durchlaufen:
- Silikon-Abformung durch den Zahnarzt,
- Erstellung eines Gips-Modells durch den Zahntechniker, welches die Kieferform wiedergibt,
- Aufstellung der künstlichen Zähne in Wachs und Modellieren des Zahnfleisches,
- Wiedereinprobe und ggfs. Korrektur durch den Zahnarzt bzw. das Zahntechniklabor,
- Einbetten der korrigierten Wachsprothese in Gips, Silikon oder Agar-Agar,
- Entfernen des Wachses durch Ausbrühen mit heißem Wasser,
- Einsetzen der künstlichen Zähne in die angefertigte Form,
- Auffüllen des entstandenen Hohlraums durch Prothesenkunststoff (z.B. PalaXpress^{®}),
- Polymerisation, Ausarbeitung und Polieren der endgültigen prothetischen Arbeit.

Zunehmend wird versucht, diesen komplexen Ablauf zu vereinfachen. So hat Heraeus Kulzer auf der IDS 2005 das Produkt Filou 28 vorgestellt (EP 1 704 831 A1). Damit gelang es erstmals, die Zeit zur Aufstellung der künstlichen Zähne in Wachs zu reduzieren.

DE102007002178A1 offenbart die Herstellung eines Basisteils mit Einzelzähnen eines künstlichen Gebisses anhand eines Datensatzes. EP1864627A2 offenbart die Herstellung einer Negativform aus einer digitalen Negativform in die dann einzelne Konfektionszähne manuell eingesteckt werden. US2009/0287332A1 offenbart ein Verfahren zum Einscannen und Herstellen von Vorlagen für Zahnersatz. US2009/0087818A1 betrifft ein Verfahren, in dem ein Tischmodell mit Grundplatte mit einzelnen Zähnen oder Einzelkronen eingescannt wird.

### Aufgabenstellung

Weiterentwicklungen auf dem Gebiet der Frästechnik (CAD/CAM) und der generativen Fertigungstechnik des schnellen Prototypenbaus (Rapid Prototyping) bzw. der schnellen Fertigung (Rapid Manufacturing) halten Einzug in die Prothetik. Man spricht hierbei von einer "Digitalisierung der Zahntechnik". Der Begriff Schnelle Fertigung bzw. englisch Rapid Manufacturing bezeichnet Methoden und Produktionsverfahren zur schnellen und flexiblen Herstellung von Bauteilen und Serien mittels werkzeugloser Fertigung direkt aus den CAD-Daten. Verwendete Materialien sind Glas, Metall, Keramik, Kunststoffe und neue Materialien (wie UV härtendes Sol-Gel, siehe z. B. Multi Jet Modeling). Da beim Rapid Manufacturing immer die direkte Herstellung des Endprodukts im Mittelpunkt steht, unterscheidet es sich grundlegend von Rapid Prototyping und Rapid Tooling (Schneller Werkzeugbau).

Nachteil dieser Verfahren (z.B. der Stereolithographie oder des Selective Laser Melting) sind die bisher nicht zufriedenstellenden ästhetischen Eigenschaften der verwendeten Materialien, da technikbedingt bisher nur einzelne und damit einfarbige Ausgangsmaterialien verwendet werden können. Gerade beim Herstellen künstlicher Zähne sind jedoch mehrfarbige Einzelbausteine notwendig, um die Natürlichkeit des Endproduktes zu imitieren.

Im Bereich der CAD/CAM-Fräs-Technik ist es bereits heute möglich, mehrfarbige, geschichtete Kunststoff- (z.B. Vita CAD-temp multicolor) oder gar Keramikmaterialien (z.B. Vitablocs Triluxe ) zu verarbeiten, die den fertigen Zahn, die fertige prothetische Arbeit sehr natürlich erscheinen lassen.

Zu den erwähnten Technikentwicklungen der letzten Jahre gehören auch Fortschritte in der digitalisierten Abdrucknahme wie z.B. Scan-Technologien (Lava C.O.S. von 3M Espe, Bluecam von Sirona, Hint ELS directScan) oder virtuelle Artikulatoren bzw. virtuelle Zahnaufstellungen.

Es stellt sich die Aufgabe, den oben beschriebenen traditionellen Herstellprozess weiter zu vereinfachen. Außerdem soll die Herstellung ästhetisch anspruchsvoller Prothesen mit farblicher Schichtung oder Farbabstufungen ermöglicht werden.

Die Aufgabe wird durch die Merkmale des Anspruchs 1 gelöst. Bevorzugte Ausgestaltungen sind den weiteren Ansprüchen zu entnehmen. Vorzugsweise erfolgen an geeigneter Stelle des oben beschriebenen Verfahrensablaufs folgende Schritte:
1. Bereitstellung von Daten aus der digitalen Abdrucknahme oder der Digitalisierung einer herkömmlichen Silikon-Funktionsabformung.
2. Fertigung eines farblich geschichteten Kunststoff- oder Keramik-Zahnbogens mittels CAD/CAM. Aufgrund der Farbschichtung genügt der Zahnbogen ästhetisch anspruchsvollen Anforderungen.
3. Erstellen und Fertigen einer Zahnfleischimitation.

Dieses Vorgehen vereinfacht den bisherigen Fertigungsablauf erheblich und hilft dadurch, Zeit und Kosten zu sparen. Die beiden Hauptkomponenten Zahnbogen und Zahnfleisch werden zweckmäßigerweise nach erfolgter Fertigung mittels etablierter Klebeverfahren (Signum zirconia bond^{®}, Signum ceramic bond^{®} oder Palabond^{®} und lichthärtendem versyo^{®} oder Palabond^{®} und einem autopolymerisierenden Prothesenkunststoff (Paladur^{®}, PalaXpress^{®}) in der gleichen Zahnfleischfarbe) fest miteinander verbunden.

### Abbildungen

Fig. 1 zeigt ein Fließbild einer beispielhaften Ausführungsform des erfindungsgemäßen Herstellverfahrens und

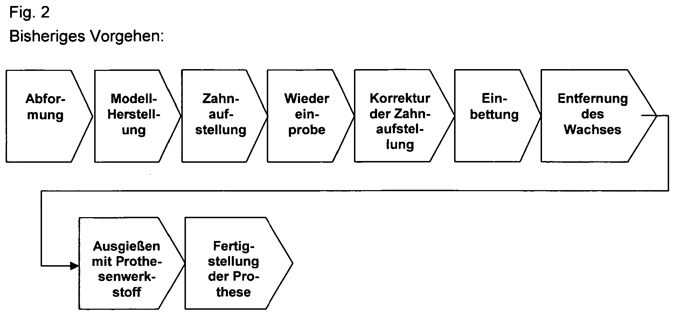

Fig. 2 ein weiteres Fließbild zum Verfahren des Standes der Technik.

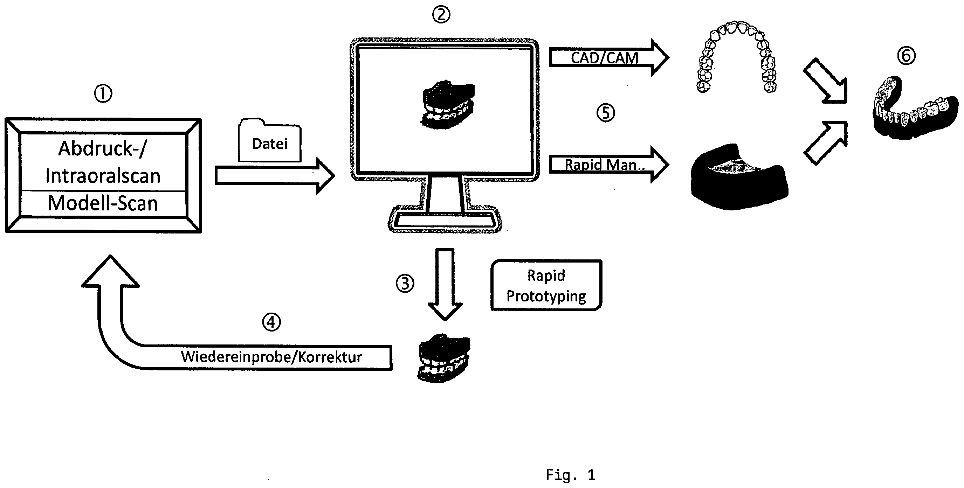

Die in Fig. 1 dargestellten Schritte der Ausführungsform des erfindungsgemäßen Verfahrens sind im Einzelnen:
- Abformung durch den Zahnarzt herkömmlich über Silikon oder Intraoralscanner (1),
- Weitergabe des digitalen Modells an das Labor und digitale Zahnaufstellung (2),
- optional: Fertigung eines Wachsmodells über RP durch z.B. Stereolithographie mit Hilfe eines als Medizinprodukt zugelassenen Dentalwachses (3),
- optional: Wiedereinprobe dieses Wachsmodells am Patienten und ggfs. Korrektur (4),
- optional: Redigitalisierung über einen 3D-Scan,
- digitales Separieren des Modells in Zahnbogen und Zahnfleischmasse mit entsprechenden Vertiefungen für den Zahnbogen und deren getrennte Fertigung (5),
- Vereinigung der beiden Hauptbestandteile über bekannte dentale Klebe- oder Fügeverfahren,
- optional: Nachbearbeitung wie z.B. Einschleifen und Polieren,
- Auslieferung an den Kunden.

## Patentansprüche

1. Verfahren zur automatisierten Herstellung von Zahnprothesen umfassend die Schritte
- Bereitstellen eines digitalen Datensatzes der zu erstellenden individuellen Prothese;
- digitales Separieren des Modells in Zahnbogen und Zahnfleisch;
- Fertigen von Zahnbogen aus Keramik oder Kunststoff mittels Frästechnologie;
- Fertigen der Prothesenbasis durch generative oder abtragende Verfahren aus überwiegend (meth-)acrylat-basierten Kunststoffen;
- Verbindung von Zahnbogen und Zahnfleisch durch Kleben oder Fügen oder einer Kombination von Kleben und Fügen.

2. Verfahren nach Anspruch 1, wobei der zur Bereitstellung des digitalen Datensatzes der zu erstellenden Prothese notwendige Datensatz des unbezahnten Kiefers entweder über einen Intraoralscan erfolgt oder
über einen 3D-Scan des Silikonabdrucks erfolgt oder
über eine Kombination aus dem 3-D Scan und Röntgendaten erfolgt oder
über einen 3D-Scan des Gipsmodells erfolgt.

3. Verfahren nach einem der vorstehenden Ansprüche, wobei die Bereitstellung des digitalen Datensatzes der zu erstellenden Prothese über eine virtuelle Zahnaufstellung, eine sogenannte virtuelle Artikulation, erfolgt.

4. Verfahren nach mindestens einem der vorstehenden Ansprüche, wobei das digitale Separieren des Modells in Zahnbogen und Zahnfleisch mit entsprechenden Vertiefungen für den Zahnbogen und deren getrennte Fertigung erfolgt.

5. Verfahren nach mindestens einem der vorstehenden Ansprüche, wobei die Trennung des digitalen Modells in fräsbaren Zahnbogen und künstliches Zahnfleisch digital mittels Software erfolgt.

6. Verfahren nach mindestens einem der vorstehenden Ansprüche, wobei die Fertigung des Zahnbogens mittels abtragenden Fertigungsverfahren erfolgt.

7. Verfahren nach mindestens einem der vorstehenden Ansprüche, wobei die Fertigung des Zahnbogens mittels abtragenden Fertigungsverfahren in zahnfarbenem, mehrfach geschichtetem Kunststoff erfolgt.

8. Verfahren nach mindestens einem der vorstehenden Ansprüche, wobei die Fertigung des Zahnbogens mittels abtragenden Fertigungsverfahren in zahnfarbener, mehrfach geschichteter Keramik erfolgt.

9. Verfahren nach mindestens einem der vorstehenden Ansprüche, wobei die Fertigung der Prothesenbasis mittels Frästechnologie erfolgt.

10. Verfahren nach mindestens einem der vorstehenden Ansprüche, wobei die Fertigung der Prothesenbasis mittels Stereolithographie erfolgt.

11. Verfahren nach mindestens einem der vorstehenden Ansprüche, wobei die Fertigung der Prothesenbasis mittels 3D Tintenstrahldruck erfolgt.

12. Verfahren nach mindestens einem der vorstehenden Ansprüche, wobei zur Fertigung der Prothesenbasis mittels generativen schnellen Fertigungsverfahren (Rapid Manufacturing) flüssige oder niedrig- bis hochviskose, ein- oder mehrfunktionelle Acrylate oder Methacrylate mit einem kurz-, mittel- oder langkettigen, aliphatischen, Poly(ethylenglykol)- oder Dendrimer-basierten Grundgerüst oder aus Mischungen dieser Einzelkomponenten erfolgt.

13. Verfahren nach mindestens einem der vorstehenden Ansprüche, wobei die Verklebung von Zahnbogen und Prothesenbasis materialabhängig über Keramik-Kunststoff-Haftvermittler oder Kunststoff-Kunststoff Haftvermittler erfolgt.

14. Verfahren nach mindestens einem der vorstehenden Ansprüche, wobei die Fügung von Zahnbogen und Prothesenbasis über mechanische Elemente wie z.B. Führungsschienen, Nuten und geeignete Retentionselemente erfolgt.

## Claims

1. Method for automated manufacture of dentures comprising the steps of
- providing a digital data set of the individual denture to be produced;
- digital separation of the model into dental arch and gingiva;
- producing the dental arch from a ceramic or plastic material using cutting technology;
- producing the denture base through generative or ablative procedures from predominantly (meth-)acrylate-based plastic materials;
- connecting dental arch and gingiva through bonding or joining or a combination of bonding and joining.

2. Method according to claim 1, whereby the data set of the edentate jaw needed for providing the digital data set of the denture to be produced is obtained from either
an intraoral scan or
a 3D scan of the silicone impression or
a combination of said 3D scan and X-ray data or
a 3D scan of the dental plaster model.

3. Method according to any one of the preceding claims, whereby the digital data set of the denture to be produced is provided through a virtual set-up of the teeth, a so-called virtual articulation.

4. Method according to at least one of the preceding claims, whereby the digital model is separated into dental arch and artificial gingiva mass with respective recesses for the dental arch, and separate fabrication thereof;

5. Method according to at least one of the preceding claims, whereby the digital separation of the model into millable dental arch and gingival mass through software.

6. Method according to at least one of the preceding claims, whereby the production of the dental arch through an ablative production procedure.

7. Method according to at least one of the preceding claims, whereby the production of the dental arch through an ablative production procedure is carried out with tooth-coloured, multilayered plastic material.

8. Method according to at least one of the preceding claims, whereby the production of the dental arch through an ablative production procedure is carried out with tooth-coloured, multilayered ceramic material.

9. Method according to at least one of the preceding claims, whereby the denture base is produced through milling technology.

10. Method according to at least one of the preceding claims, whereby the denture base is produced through stereolithography.

11. Method according to at least one of the preceding claims, whereby the denture base is produced through 3D ink jet printing.

12. Method according to at least one of the preceding claims, whereby the production of the denture base through generative rapid manufacturing methods is based on liquid or low-to high-viscosity, mono- or multi-functional acrylates or methacrylates having a short-, medium- or long-chain aliphatic poly(ethylene glycol)- or dendrimer-based matrix or on mixtures of said individual components.

13. Method according to at least one of the preceding claims, whereby the bonding of dental arch and denture base is effected as a function of the material using ceramic-plastic bonding agents or plastic-plastic bonding agents.

14. Method according to at least one of the preceding claims, whereby the joining of dental arch and denture base is effected through mechanical elements, such as, e.g., guide splints, grooves, and suitable retention elements.

## Revendications

1. Procédé de fabrication automatisée de prothèses dentaires comprenant les étapes suivantes ;
- mise à disposition d'un jeu de données numériques de la prothèse individuelle à réaliser ;
- séparation numérique du modèle en arcade dentaire et en gencive ;
- fabrication de l'arcade dentaire en céramique ou en matière plastique au moyen de la technologie de fraisage ;
- fabrication de la base de la prothèse par procédé génératif ou par enlèvement de matière à partir de matières plastiques principalement à base de (méth)acrylate ;
- assemblage de l'arcade dentaire et de la gencive par collage ou assemblage ou par une combinaison de collage et d'assemblage.

2. Procédé selon la revendication 1, dans lequel le jeu de données de la mâchoire édentée, nécessaire à la mise à disposition du jeu de données numériques de la prothèse à réaliser, est réalisé
soit par un scanner intra-oral,
soit par une numérisation 3D de l'empreinte en silicone,
soit par une combinaison de la numérisation 3D et de données radiographiques,
soit par une numérisation 3D du modèle en plâtre.

3. Procédé selon l'une des revendications précédentes, dans lequel la mise à disposition du jeu de données numériques de la prothèse à réaliser s'effectue par une mise en place virtuelle des dents, appelée articulation virtuelle.

4. Procédé selon au moins l'une des revendications précédentes, dans lequel la séparation numérique du modèle en arcade dentaire et en gencive avec des cavités correspondantes pour l'arcade dentaire et leur fabrication séparée est réalisée.

5. Procédé selon au moins l'une des revendications précédentes, dans lequel la séparation du modèle numérique en arcade dentaire fraisable et en gencive artificielle est réalisée numériquement au moyen d'un logiciel.

6. Procédé selon au moins l'une des revendications précédentes, dans lequel la fabrication de l'arcade dentaire est réalisée au moyen d'un procédé de fabrication par enlèvement de matière.

7. Procédé selon au moins l'une des revendications précédentes, dans lequel la fabrication de l'arcade dentaire est réalisée dans une matière plastique multicouche de la couleur des dents au moyen d'un procédé de fabrication par enlèvement de matière.

8. Procédé selon au moins l'une des revendications précédentes, dans lequel la fabrication de l'arcade dentaire est réalisée dans une céramique multicouche de la couleur des dents au moyen d'un procédé de fabrication par enlèvement de matière.

9. Procédé selon au moins l'une des revendications précédentes, dans lequel la fabrication de la base de la prothèse est réalisée au moyen de la technologie de fraisage.

10. Procédé selon au moins l'une des revendications précédentes, dans lequel la fabrication de la base de la prothèse est réalisée par stéréolithographie.

11. Procédé selon au moins l'une des revendications précédentes, dans lequel la fabrication de la base de la prothèse est réalisée par impression à jet d'encre 3D.

12. Procédé selon au moins l'une des revendications précédentes, dans lequel, pour la fabrication de la base de la prothèse au moyen d'un procédé de fabrication génératif rapide (Rapid Manufacturing), on utilise des acrylates ou des méthacrylates liquides ou de faible à forte viscosité, monofonctionnels ou polyfonctionnels, avec une structure de base à chaîne courte, moyenne ou longue, aliphatique, à base de poly(éthylèneglycol) ou de dendrimère, ou des mélanges de ces différents composants.

13. Procédé selon au moins l'une des revendications précédentes, dans lequel le collage de l'arcade dentaire et de la base de la prothèse est réalisé, en fonction du matériau, par un agent adhésif céramique-résine ou un agent adhésif résine-résine.

14. Procédé selon au moins l'une des revendications précédentes, dans lequel l'assemblage de l'arcade dentaire et de la base de la prothèse est réalisé par des éléments mécaniques tels que des glissières, des rainures et des éléments de rétention appropriés.
